# EUROPEAN PATENT APPLICATION

(11) **EP 2 772 858 A2**
(43) Date of publication of application: **03.09.2014**
(21) Application number: 14152929.7
(22) Date of filing: 28.01.2014
(51) Int. Cl.: G06F 9/50

(54) **Management apparatus and method of managing server node**

(30) Priority: 27.02.2013 KR 20130021544
(71) Applicant: Samsung Electronics Co., Ltd, Gyeonggi-do 443-742 (KR)
(72) Inventor: Ban, Min-ho, Gyeonggi-do (KR); Yun, Il-kook, Gyeonggi-do (KR)
(74) Representative: Walaski, Jan Filip

(57) **Abstract**

A management apparatus and a method of managing servers. The management apparatus is connectable with a plurality of server nodes and may include: a user interface which receives input of work environment information of a user; a storage which stores apparatus information of each of the plurality of server nodes, a plurality of operating system O/S programs, and the received work environment information; a controller which selects a server node to perform a task from among the plurality of server nodes, and selects an O/S program to perform the task from among the plurality of O/S programs, based on the received work environment information; and a communication interface which transmits the selected O/S program to the selected server node, and allows the server node to be run by the selected O/S program.

## Description

The present invention relates to a management apparatus and a method of managing a server node, and more particularly, to a management apparatus which is connectable with a plurality of server nodes.

With the development of high-speed internet and intranet technologies, there is an increasing demand for server technology capable of processing a huge amount of data. However, in recent years, micro servers which implement eco computing using a lower power and low specification core, against the trend to stress only high performance, are emerging as a new paradigm in the industry.

The micro server refers to a parallel processing server in which a plurality of server nodes (or process modules) having core elements of a server such as at least one central processing unit (CPU) and a memory apparatus embedded therein are mounted, and which supports power, input and output, and auxiliary apparatuses for the server nodes.

In a related-art cluster and server farm installing method, an administrator has difficulty in directly selecting a node suitable for a work environment and installing it based on a user's request. However, according to methods suggested in the present disclosure, a controller in a management server automatically performs this operation and problems in the related art as well as other problems can be solved.

On the other hand, in a single related-art micro server, an interface is designed to use only a server node of the same type, that is, a server node having a homogeneous CPU mounted therein. However, in recent years, a micro server having a plurality of heterogeneous server nodes mounted therein is being developed.

Therefore, there is a problem that a related-art management apparatus, which is adapted to control a micro server or a server farm environment consisting of homogenous server nodes, is not able to control the recently developed micro server consisting of a plurality of heterogeneous server nodes.

Also, since users are required to consider apparatus information of each of the heterogeneous server nodes in order to perform a task, managing is becoming increasingly complex.

One or more exemplary embodiments provide a management apparatus, which is connectable with a plurality of server nodes, and can provide a work environment by selecting an appropriate server node according to information of a running work environment and installing an operating system (O/S), without having to consider apparatus information of the plurality of server nodes connected to the management apparatus one by one, and a method of managing a server node.

Additional features and utilities of the present invention will be set forth in part in the description which follows and, in part, will be obvious from the description, or may be learned by practice of the invention.

Exemplary embodiments of the present invention provide a management apparatus which is connectable with a plurality of server nodes, the management apparatus including: a user interface which receives input of work environment information of a user; a storage which stores apparatus information of each of the plurality of server nodes, a plurality of O/S programs, and the received work environment information; a controller which selects a server node to perform a task from among the plurality of server nodes, and selects an O/S program to perform the task from among the plurality of O/S programs, based on the received work environment information; and a communication interface which transmits the selected O/S program to the selected server node, and allows the server node to be run by the selected O/S program.

The plurality of server nodes may be server nodes of at least two different types.

The plurality of server nodes may be implemented by using a plurality of process modules of different types of a micro server, and the micro server may connect a controller and the plurality of process modules of the different types through a common interface bus.

The controller may automatically select a server node to perform a task from among the plurality of server nodes, and may select an O/S program to perform the task from among the plurality of O/S programs, based on the apparatus information of each of the plurality of server nodes.

The apparatus information may include at least one of MAC address information, CPU information, memory information, network information, and information of an available O/S program.

The communication interface may detect MAC addresses of the plurality of server nodes at predetermined time intervals.

When a new MAC address is detected, the communication interface may transmit a boot process program to a server node corresponding to the new MAC address, may receive apparatus information of the server node, and may add the apparatus information to the storage.

When a MAC address of a server node stored in the storage is not detected for a predetermined time, the communication interface may delete apparatus information of the server node from the storage.

When there is no server node corresponding to the selected work environment information from among the plurality of server nodes, the controller may control the user interface to display a message informing that there is no corresponding server node.

The O/S program may include at least one of an O/S installation file, a backed up O/S image file, and a VM instance image file.

When there is another running work environment in the selected server node, the controller may control the selected server node to run the selected work environment on the another work environment as a virtual environment.

When a plurality of server nodes corresponding to the selected work environment information are searched, the controller may select a server node to perform the task according to a running state of each of the searched plurality of server nodes.

When the O/S program is run in the selected server node, the controller may control the user interface to display an icon corresponding to the work environment.

The controller may provide a UI screen corresponding to the work environment, and may control the work environment.

The user interface may receive selection of a server node to perform a backup, and the controller may transmit a backup program to the selected server node and may back up an O/S program and an application program which are being run.

The user interface may receive selection of a server node to restore a backup, and the controller may transmit the O/S program and the application program which have been backed up to the selected server node, and may restore the backup.

Exemplary embodiments of the present inventive concept also provide a method of managing a server node of a management apparatus which is connectable with a plurality of server nodes and stores apparatus information of each of the plurality of server nodes and a plurality of O/S programs, the method including: receiving input of work environment information; selecting a server node to perform a task from among the plurality of server nodes, and selecting an O/S program to perform the task from among the plurality of O/S programs, based on the received work environment information; transmitting the selected O/S program to the selected server node; and running the server node by means of the transmitted O/S program.

The plurality of server nodes may be server nodes of at least two different types.

The plurality of server nodes may be implemented by using a plurality of process modules of different types of a micro server, and the micro server may connect a controller and the plurality of process modules of the different types through a common interface bus.

The selecting may include automatically selecting a server node to perform a task from among the plurality of server nodes, and selecting an O/S program to perform the task from among the plurality of O/S programs, based on the apparatus information of each of the plurality of server nodes.

The apparatus information may include at least one of MAC address information, CPU information, memory information, network information, and information of an available O/S program.

The method may further include detecting MAC addresses of the plurality of server nodes at predetermined time intervals.

The method may further include, when a new MAC address is detected after the detecting the MAC addresses, transmitting a boot process program to a server node corresponding to the new MAC address, receiving apparatus information of the server node, and adding the apparatus information to the storage.

The method may further include, when a MAC address of a server node stored in the storage is not detected for a predetermined time after the detecting the MAC addresses, deleting apparatus information of the server node from the storage.

The method may further include, when there is no server node corresponding to the selected work environment information from among the plurality of server nodes after receiving input of the work environment information, displaying a message informing that there is no corresponding server node.

The O/S program may include at least one of an O/S installation file, a backed up O/S image file, and a VM instance image file.

When there is another running work environment in the selected server node, the transmitting the selected O/S program to the selected server node may include transmitting the VM instance image file to the selected server node so that a plurality of work environments are used, and the running the server node may include running the selected work environment on the another work environment as a virtual environment using the VM instance image file.

The selecting the server node to perform the task and selecting the O/S program to perform the task from among the plurality of O/S programs may include, when a plurality of server nodes corresponding to the selected work environment information are searched, selecting a server node and an O/S program to perform the task according to a running state of each of the searched plurality of serve nodes.

The method may further include: when the O/S program is run in the selected server node, displaying an icon corresponding to the work environment; and providing a UI screen corresponding to the work environment, and controlling the work environment.

The method may further include: receiving selection of a server node to perform a backup; transmitting a backup program to the selected server node; and performing the backup program and backing up an O/S program and an application program which are being run in the selected server node.

The method may further include: receiving selection of a server node to restore a backup; and transmitting the O/S program and the application program which have been backed up to the selected server node, and restoring the backup.

Exemplary embodiments of the present inventive concept also provide a non-transitory computer readable medium which executes a method of managing a server node of a management apparatus which is connectable with a plurality of server nodes and stores apparatus information of each of the plurality of server nodes and a plurality of O/S programs, the method including: receiving input of work environment information; storing the received work environment information; selecting a server node to perform a task from among the plurality of server nodes, and selecting an O/S program to perform the task from among the plurality of O/S programs, based on the received work environment information; transmitting the selected O/S program to the selected server node; and running the server node by means of the transmitted O/S program.

Exemplary embodiments of the present inventive concept also provide a microserver management apparatus, comprising: a user interface to receive input of work environment information of a user; and a controller to select one of a plurality of server nodes of the microserver to perform a task, and selects an O/S program from a plurality of O/S/ programs to perform the task, based on the received work environment information.

According to an exemplary embodiment, the plurality of server nodes are server nodes of at least two different types.

According to an exemplary embodiment, when there is already a running work environment in the selected server node, the controller controls the selected server node to run a work environment selected on the already running work environment as a virtual environment.

According to an exemplary embodiment, when the O/S is run in the selected server mode, the controller controls the user interface to display an icon corresponding to the work environment, and when the the icon is selected, the controller provides a UI screen of the work environment corresponding to the icon and controls the running environment work.

According to an exemplary embodiment, the management apparatus further comprises a storage to store apparatus information of each of the plurality of server nodes, a plurality of O/S programs, and the received work environment inform.

According to an exemplary embodiment, the controller automatically selects a server node to perform a task from among the plurality of server nodes, and selects an O/S program to perform the task from among the plurality of O/S programs, based on the apparatus information of each of the plurality of server nodes.

Exemplary embodiments of the present inventive concept also provide a method of managing server nodes of a microserver at a management apparatus, the method comprising: receiving an input of work environment information at the management apparatus; and selecting one of a plurality of server nodes to perform a task, and selecting an O/S program from a plurality of O/S/ programs to perform the task, based on the received work environment information.

According to an exemplary embodiment, the plurality of server nodes are server nodes of at least two different types.

According to an exemplary embodiment, the method further comprises transmitting the selected O/S program from the management apparatus to the selected server node and controlling the server node to run using the selected O/S program.

According to an exemplary embodiment, when there is already a running work environment in the selected server node, controlling the selected server node to run a work environment selected on the already running work environment as a virtual environment.

According to an exemplary embodiment, the method further comprises storing apparatus information of each of the plurality of server nodes, a plurality of O/S programs, and the received work environment information within the management apparatus.

According to an exemplary embodiment, the selecting comprises automatically selecting a server node to perform a task from among the plurality of server nodes, and selecting an O/S program to perform the task from among the plurality of O/S programs, based on the apparatus information of each of the plurality of server nodes.

These and/or other features and utilities of the present invention will become apparent and more readily appreciated from the following description of the embodiments, taken in conjunction with the accompanying drawings in which:
FIG. 1 is a block diagram illustrating a configuration of a management apparatus according to an exemplary embodiment;
FIG. 2 is a view to explain a server node managing operation of a management apparatus according to an exemplary embodiment;
FIG. 3 is a view to explain a storage of a management apparatus according to an exemplary embodiment;
FIG. 4 is a view to explain a software configuration of a server node in which a single work environment is run according to an exemplary embodiment;
FIG. 5 is a view to explain a software configuration of a server node in which a plurality of work environments are run according to an exemplary embodiment;
FIGS. 6 and 7 are views to explain a micro server which includes a plurality of server nodes according to an exemplary embodiment;
FIG. 8 is a view to explain an icon and a user interface (UI) screen which correspond to a work environment according to an exemplary embodiment;
FIG. 9 is a view to explain a menu to receive input of work environment information according to an exemplary embodiment;
FIG. 10 is a flowchart to explain a method of managing a server node according to an exemplary embodiment;
FIG. 11 is a flowchart to explain an operation of selecting a server node in detail, according to an exemplary embodiment;
FIG. 12 is a flowchart to explain an operation of detecting a server node in detail, according to an exemplary embodiment;
FIG. 13 is a flowchart to explain an operation of backing up in detail, according to an exemplary embodiment; and
FIG. 14 is a flowchart to explain an operation of restoring a backup in detail, according to an exemplary embodiment.

Hereinafter, exemplary embodiments will be described in greater detail with reference to the accompanying drawings.

In the following description, the same reference numerals are used for the same elements when they are depicted in different drawings. The matters defined in the description, such as detailed construction and elements, are provided to assist in a comprehensive understanding of exemplary embodiments. Thus, it is apparent that exemplary embodiments can be carried out without those specifically defined matters. Also, functions or elements known in the related art are not described in detail since they would obscure the exemplary embodiments with unnecessary detail.

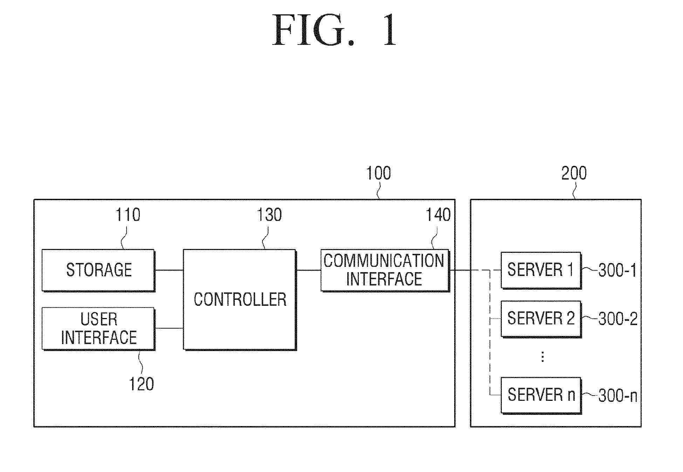

Referring to FIG. 1, a management apparatus 100 includes a storage 110, a user interface 120, a controller 130, and a communication interface 140.

According to an exemplary embodiment, the management apparatus 100 is connected with a plurality of server nodes 300-1, 300-2, ..., 300-n. The plurality of server nodes 300-1, 300-2, ..., 300-n may be homogeneous or heterogeneous server nodes. Specifically, the plurality of server nodes 300-1, 300-2, ..., 300-n may be implemented by using a plurality of process modules of different types of a micro server 200.

The micro server 200 refers to a parallel processing server in which a plurality of server nodes (or process modules) having core elements of a server such as at least one CPU and a memory apparatus embedded therein are mounted, and which supports power, input and output, and auxiliary apparatuses for the server nodes.

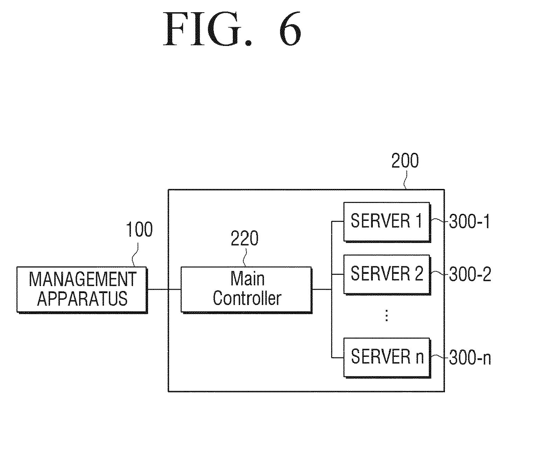

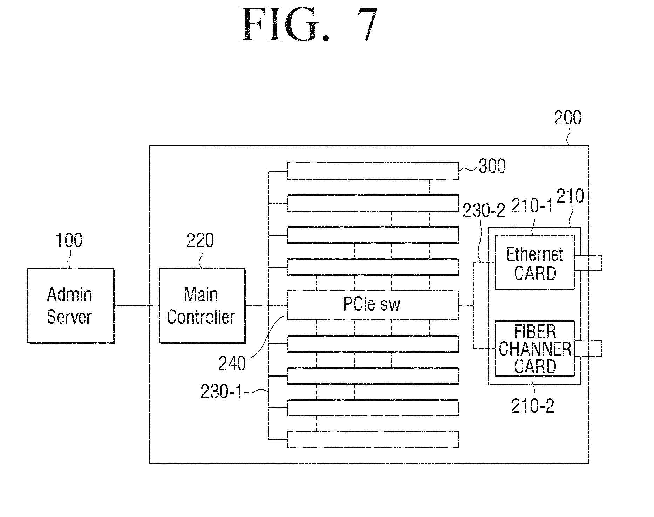

A detailed configuration of the micro server 200 according to an exemplary embodiment will be explained in detail below with reference to FIGS. 6 and 7.

Although the plurality of server nodes 300-1, 300-2, ..., 300-n are the plurality of process modules (or CPU boards) mounted in the micro server 200 in FIG. 1, the plurality of server nodes 300-1, 300-2, ..., 300-n may be implemented by using a plurality of server apparatuses constituting a server farm or a server cluster. The storage 110 stores apparatus information of each of the plurality of server nodes 300-1, 300-2, ..., 300-n, a plurality of operating system (O/S) programs, and information on a selected work environment. Specifically, the storage 110 may include a global resource storage which stores apparatus information of each of the plurality of server nodes, a work environment information storage which stores user information, a work environment generating specification, and an instance unique ID (IUID), and an O/S image storage which stores an O/S program and a backup/restore image.

The IUID recited herein refers to key data in which user information is mapped onto a generated work environment (OS).

The apparatus information of the plurality of server nodes 300-1, 300-2, ..., 300-n may include at least one of MAC address information, a serial number (S/N), CPU information, memory information, network information, and information of an available O/S program of the server node. Since the plurality of server nodes may have different apparatus specifications, the apparatus information may be stored and used when a server node is selected. The O/S program may include at least one of an O/S installation file, a backed up O/S image file, and a virtual machine (VM) instance image file.

The storage 110 may store an O/S program to control the operation of the management apparatus 100, and may store an application program which is managed by the O/S, and performs the operation of the management apparatus 100 using resources of the O/S and provides a user interface.

The storage 110 may be implemented by using at least one of a memory card (e.g., an SD card and a memory stick) which can be mounted in or dismounted from a read only memory (ROM), a random access memory (RAM), or the management apparatus 100, a non-volatile memory, a volatile memory, a hard disk drive (HDD), and a solid state drive (SSD).

The user interface 120 may receive input of work environment information. Specifically, the user interface 120 displays a work environment generating specification menu, and receives input of information on a work environment to perform a task from the user.

The work environment described herein refers to a single software environment that enables an O/S program and an application program to be run to perform a task in a single server node, and may be called an O/S instance or a container. For example, the work environment may be a general O/S, a guest O/S on a virtual machine, LGUEST, LXC or UML of Linux.

According to an exemplary embodiment, the user may remotely access the user interface 120 of the management apparatus 100 and may input work environment information on a server environment that the user wants to use.

In this case, the management apparatus 100 selects a server node based on the input work environment information, and installs an O/S in the selected server node to be operated.

The work environment information may include apparatus information of a server node suitable for running the work environment and O/S program information.

When there is no server node corresponding to the work environment information selected under the control of the controller 130, the user interface 120 according to an exemplary embodiment may display a message informing the user that there is no corresponding server node.

When the O/S is run in the server node 300 selected under the control of the controller 130, the user interface 120 may display an icon corresponding to the work environment. In this case, when the icon is selected, a UI screen of the work environment corresponding to the icon may be displayed.

The UI may be a text-based command line interface (CLI) or a graphic user interface (GUI) of a window format.

The user interface 120 may receive a selection of a server node to perform a backup. Also, the user interface 120 may receive a selection of a server node to restore a backup.

The user interface 120 may include a plurality of function keys through which the user sets or selects various functions supported by the management apparatus 100, and may display a variety of information provided by the management apparatus 100. The user interface 120 may be implemented by combining a monitor and a mouse, or may be implemented by using an apparatus which implements input and output simultaneously, such as a touch pad, or other form of input and output simultaneously, which provides the intended purposes as described herein.

The controller 130 selects a server node to perform a task from among the plurality of server nodes 300-1, 300-2, ..., 300-n, and selects an O/S program to perform the task from among the plurality of O/S programs based on the selected work environment information. Specifically, in order to select a server node suitable for the work environment information selected through the user interface 120, the controller 130 may load the apparatus information of each of the plurality of server nodes 300-1, 300-2, ..., 300-n connected to the management apparatus 100 and the O/S program information from the storage 110. The controller 130 retrieves the loaded apparatus information and O/S program information and selects a suitable server node.

The controller 130 may automatically select a server node to perform a task from among the plurality of server nodes and an O/S program to perform the task from among the plurality of O/S programs based on the apparatus information of the plurality of server nodes.

When a plurality of server nodes corresponding to the selected work environment information are searched, the controller 130 may select a server node to perform the task according to a running state of each of the searched server nodes. For example, the controller 130 may select a server node that has the smallest number of running work environments from among the searched server nodes.

When there is no server node corresponding to the selected work environment information from among the plurality of server nodes 300-1, 300-2, ..., 300-n, the controller 130 may control the user interface 120 to display a message informing the user that there is no corresponding server node.

When there is another running work environment in the selected server node, the controller 130 may control the selected server node to run a work environment selected on another work environment as a virtual environment.

The virtual environment refers to a work environment that is generated using virtualization technology to share resources of a single server node. The virtualization technology runs a plurality of work environments by generating a plurality of virtual machines on a single server apparatus and allowing the virtual machines to share resources.

When there is another running work environment in the server node selected by the controller 130, the controller 130 transmits the VM instance image file stored in the storage 110 to the selected server node, loads a virtual machine onto the existing work environment, and runs a new O/S and a new application program.

In the same way, two or more work environments may be run in a single server node.

When the O/S is run in the selected server node, the controller 130 may control the user interface 120 to display an icon corresponding to the work environment. When the icon is selected, the controller 130 provides a UI screen of the work environment corresponding to the icon and controls the running environment work.

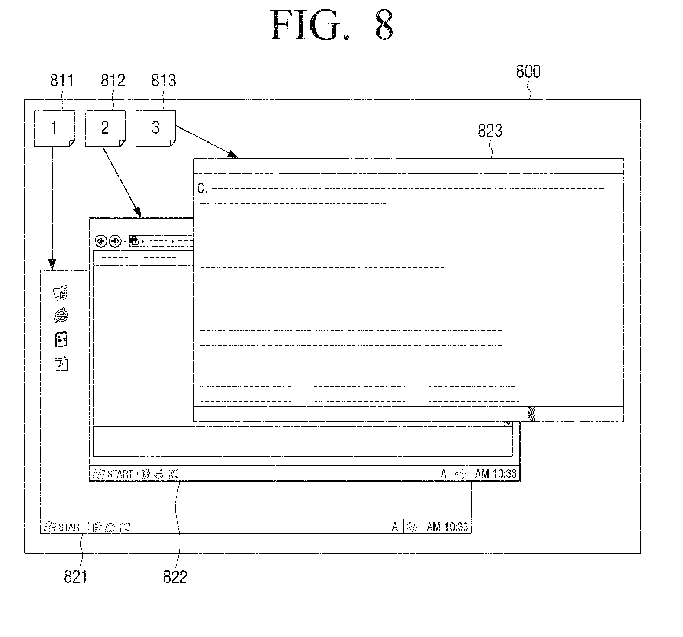

The icon and the UI screen of the work environment will be explained in detail below with reference to FIG. 8.

When a server node to perform a backup is selected through the user interface 120, the controller 130 transmits a backup program to the selected server node and backs up the running O/S program and application program.

Specifically, when the server node to perform the backup is selected by the user through the user interface 120, the controller 130 may search for a space to store a backup file.

The space to store the backup file may be input directly by the user through the user interface 120, or may be a predetermined storage space like the storage 110 of the management apparatus. For example, the space to store the backup file may be implemented by using the storage 110 of the management apparatus 100, an external memory apparatus connected to the management apparatus 100, or a storage of at least one of the plurality of server nodes.

The controller 130 may perform a network mount to connect the selected server node and the space to store the backup file. The network mount may be performed in various ways, such as by using a network block device (NBD), iSCSI, and ATA over Ethernet (AoE).

When the network mount is completed, the controller 130 transmits a backup program to the server node and backs up the O/S program and the application program which are being run in the server node. Specifically, the controller 130 runs the backup program, compresses the O/S program and the application program, and generates a backup file, and transmits the generated backup file to the storage space connected through the network mount and stores the backup file in the storage space.

The method for backing up includes a live snapshot method that backs up in a state where the O/S program is being run, and a method that backs up in a state where the O/S program is temporarily stopped.

When the backup is completed, the controller 130 may release the network mount and may store information on the storage space in which the backup file is stored in the storage 110. The controller 130 may store the backed up O/S and user information in the storage 110 along with the information of the storage space.

On the other hand, when a server node to restore the backup is selected through the user interface 120, the controller 130 transmits the backed up O/S program and application program to the selected server node, and restores the backup.

Specifically, the method of restoring the backup may be performed by transmitting the backed up file to the server to restore the backup and decompressing the file.

Transmitting the backup file, decompressing the backup file, installing the O/S program and running the application program will be explained below when the communication interface 140 is explained.

The communication interface 140 transmits the selected O/S program to the selected server node so that the server node is run by the selected O/S program. Specifically, the communication interface 140 may transmit the selected O/S program to the server node selected by the controller 130. Also, the transmitted O/S program may be installed in the server node, and thus a new work environment may be run.

The O/S program may be transmitted to the server node and installed in various ways, such as remote installation service (RIS), pre-boot execution environment (PXE), file transfer protocol (FTP), trivial file transfer protocol (TFTP), network file system (NFS), common internet file system (CIFS), and secure shell (SSH), and remote shell protocol (RSH).

Transmitting the backup file, decompressing the backup file, installing the O/S program and running the application program will be explained below when the communication interface 140 is explained.

The communication interface 140 may transmit the backup file.

Transmitting the backup file to the server node, decompressing, and installing the O/S program may be performed in various ways such as RIS, PXE, FTP, TFTP, NFS, CIFS, SSH, and RSH as described above. However, unlike in installing the O/S program, in restoring the backup, the application program that was being run at the time of backing up is also installed at the same time of installing the O/S program.

On the other hand, the communication interface 140 may detect MAC addresses of the plurality of server nodes at predetermined time intervals.

Specifically, the communication interface 140 may detect MAC addresses of server nodes of the micro server 200 at predetermined time intervals in order to detect a server node that is newly added to the micro server 200. Detecting the MAC addresses may be performed using a network maper (NMAP) or a dynamic host configuration protocol (DHCP) server.

When a new MAC address is detected, the communication interface 140 transmits a boot process program to a server node corresponding to the new MAC address, receives apparatus information of the server node, and adds the apparatus information to the storage 110.

The boot process program recited herein is a program that boots the newly added server node and transmits apparatus information to the managing apparatus 100, and may be loaded into a memory of the server node and operated. For example, the boot process program may be run using a pre-boot execution environment (PXE) booting method.

The above-described O/S program is installed after being stored in the server node, but the boot process program is just loaded into the memory of the server node and transmits only the apparatus information.

The apparatus information recited herein may include hardware information of the server node such as a serial number (S/N), a MAC address, CPU information, and memory information of the server node.

The communication interface 140 may add the transmitted apparatus information to the storage 110.

The communication interface 140 may also detect a server node that is removed from the micro server 200.

Specifically, when the MAC address of the server node stored in the storage 110 is not detected for a predetermined period of time, the communication interface 140 may delete apparatus information of the undetected server node from the storage 110.

The predetermined period of time may be set by a manufacturer or may be directly set by the user.

The server node may have an operation mode such as a sleep mode and a power off mode. In this case, the communication interface 140 may communicate with a controller of each server node and may determine whether the server node is removed from the micro server 200.

Power may not be supplied to the CPU and the memory of the server node in the sleep mode or power off mode. However, power is supplied to the controller of the server node unless the server node is removed from the micro server 200. Therefore, it can be determined whether the server node is removed or not.

The communication interface 140 connects the management apparatus 100 and the plurality of server nodes 300-1, 300-2, ..., 300-n.

When the plurality of server nodes 300-1, 300-2, ..., 300-n are implemented as one element of the micro server 300, the communication interface 140 is connected to a main controller of the micro server 300 and may exchange control signals and data with the main controller. The data may include analogue data and digital data and may refer to data that is output from a general server apparatus such as a video, a keyboard, a mouse, and an UART (serial), and data of all kinds of electronic apparatuses using protocols such as a remote frame buffer (RFB), a remote desktop protocol (RDP), X11, telnet, ssh, and rsh.

On the other hand, when the plurality of server nodes 300-1, 300-2, ..., 300-n are implemented as one element of a server farm or a server cluster, the communication interface 140 may be directly connected to each of the plurality of server nodes 300-1, 300-2, ..., 300-n, or may be indirectly connected to the plurality of server nodes 300-1, 300-2, ..., 300-n using an Ethernet switch.

When the plurality of server nodes 300-1, 300-2, ..., 300-n are implemented as one element of the server farm or the server cluster, the management apparatus 100 may exist in or outside the cluster, or a specific server node in the cluster may perform the function of the management apparatus 100.

As described above, the management apparatus 100 of FIG. 1 can automatically provide a work environment by selecting an appropriate server node according to information on a running work environment, and installing an O/S, without requiring the user to consider apparatus information of the plurality of server nodes 300-1, 300-2, ..., 300-3 connected to the management apparatus 100 one by one.

Also, the management apparatus 100 of FIG. 1 can effectively control the micro server 300 which includes the plurality of server nodes of various types.

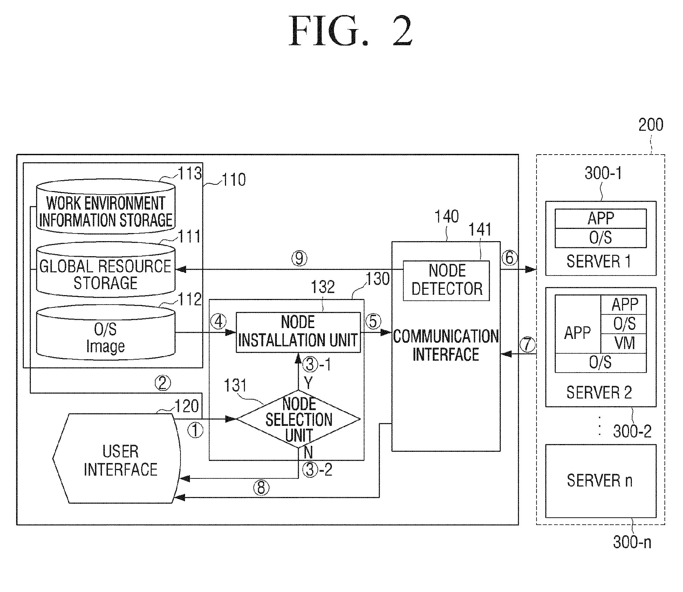

FIG. 2 is a view to explain a server node managing operation of the management apparatus 100 according to an exemplary embodiment.

Referring to FIG. 2, (1) when information on a work environment to perform a task is input by the user through the user interface 120, (2) the work environment information matches user information and is stored in the work environment information storage 113, and a node selection unit 131 may load apparatus information of the plurality of server nodes 300-1, 300-2, ..., 300-n stored in the global resource storage 111.
(3)-1 Also, a matching server node is selected using the input work environment information and the loaded apparatus information.
(3)-2 However, when there is no matching server node, a message informing that there is no corresponding server node may be output through the user interface 120.
(4) A node installation unit 132 may search for an O/S program that corresponds to the input work environment information from among the plurality of O/S programs stored in the O/S image storage 112 of the storage 110, and may load the O/S program.
(5) Also, the node installation unit 132 may transmit the loaded O/S program to the communication interface 140.
(6) The communication interface 140 may run a work environment to perform the task by transmitting the loaded O/S program to the selected server node and installing the O/S program.
(7) On the other hand, when the O/S is run in the selected server node, the server node may transmit output data to the communication interface 140, and (8) the communication interface 140 provides the output data to the user interface 120 and displays the data on a UI screen or outputs the same in various ways.
(9) A node detector 141 of the communication interface 140 may detect MAC addresses of the server nodes mounted in the micro server 200 at predetermined time intervals, and may update data of the global resource storage 111, reflecting addition and removal of the server node.

The updating when the server node is added or removed has been described above with the explanation of the communication interface 140 with reference to FIG. 1, and thus a redundant explanation is omitted.

As described above, the server node managing operation of the management apparatus 100 of FIG. 2 can automatically provide a work environment by selecting an appropriate server node according to information on a running work environment and installing an O/S, and also, can automatically update apparatus information of the plurality of server nodes.

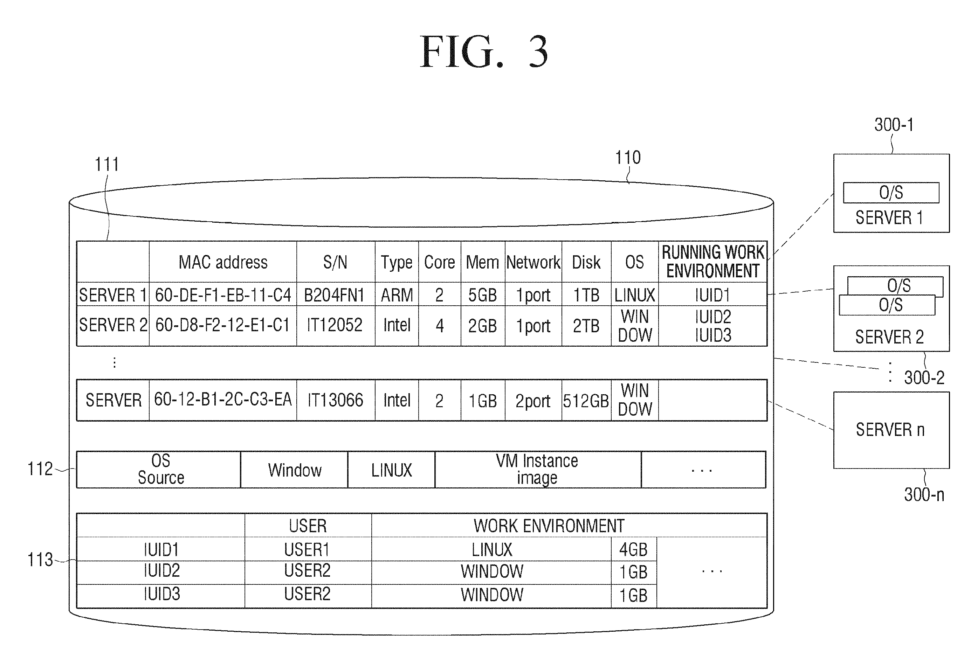

FIG. 3 is a view to explain the storage 110 of the management apparatus 100 according to an exemplary embodiment.

Referring to FIG. 3, the storage 110 may include the global resource storage 111 to store apparatus information of each of the plurality of server nodes, the O/S image storage 112 to store the plurality of O/S programs, and the work environment information storage 113, as described in FIGS. 1 and 2.

The global resource storage 111 may store MAC addresses of the plurality of server nodes, a serial number (S/N), a CPU type, a number of CPU cores, a size of a memory, a number of networks, a size of a disk, and a number of available O/Ss and a number of running O/Ss (or a number of running work environments and an instance unique ID (IUID). Also, according to an exemplary embodiment, the apparatus information of the server node stored in the global resource storage 111 may be used when a server node is selected.

The O/S image storage 112 may store the plurality of O/S programs. For example, the plurality of O/S programs may be at least one of a Windows™ installation file, an installation file of Linux, and a VM instance image file.

The O/S image storage 112 may store a result of performing a backup. Specifically, the O/S image storage 112 may store information on a storage space in which a backed up file is stored, information on a backed up O/S and user information.

The work environment information storage 113 may store work environment information generated by each user. Information of a user who generates a work environment with reference to an IUID, and work environment information input to the work environment generating specification may be stored.

Hereinafter, software layers constituting the controller 130 will be explained.

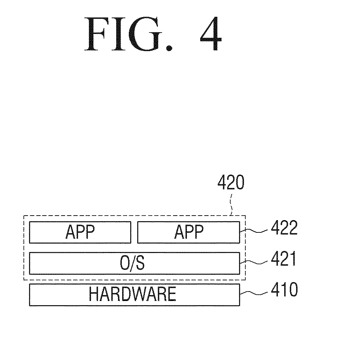

FIG. 4 is a view to explain a software configuration of a server node in which a single work environment is being run according to an exemplary embodiment.

Referring to FIG. 4, a single server node includes hardware 410, an O/S 421, and an application 422 which is managed by the O/S as a process and provides a user service using resources.

A single work environment may be established including the one O/S 421 and the application 422 which is managed by the O/S as a process.

The O/S 421 controls an overall operation of the hardware 410 and manages the hardware 310 and a process corresponding to each application. That is, the O/S 421 is a layer that manages hardware and performs a basic function such as memory and security. The O/S 421 processes a call of an application and operates the hardware 410 according to a result of the processing.

The application 422 layer to perform various tasks input from the management apparatus 100 exists on an upper layer of the O/S 421. Each application 422 provides a user interface, receives a command from the management apparatus 100, and requests resources from the O/S 420. The O/S 420 may process a system call and may manage tasks of many applications.

The software configuration of the server node in which the single work environment is being run has been described above. Hereinafter, a software configuration in a plurality of work environments will be explained.

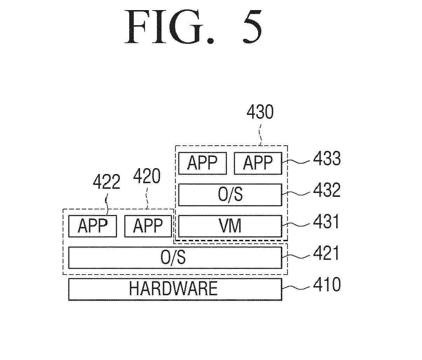

FIG. 5 is a view to explain a software configuration of a server node in which a plurality of work environments are being run according to an exemplary embodiment.

According to an exemplary embodiment, in order to run a plurality of work environments in a single server node, a virtual machine may be used and a work environment added as a virtual environment may be run. The virtual environment recited herein refers to a work environment that is run based on the virtual machine.

Referring to FIG. 5, a first work environment 420 is being run in a single server node.

In order to additionally run a second work environment 430, a virtual machine (VM) 431 may be used. Specifically, the O/S 421 of the first work environment 420 may perform a function of a hypervisor of virtualization technology. The hypervisor of the virtualization technology is a logical platform to execute a plurality of O/Ss simultaneously, and may be called a virtual machine monitor (VMM).

The management apparatus 100 may transmit a VM instance image file to the server node and may install the VM 431 on the O/S 421 of the first work environment 420, in order to additionally run the second work environment 430. Based on the installed VM 431, an O/S 432 and an application 433 of the second work environment 430 may be executed. The O/S 421 of the first work environment 420 may perform a function of a hypervisor of the second work environment 430.

In the above-described method, the plurality of work environments may be run in the single server node.

FIGS. 6 and 7 are views to explain the micro server 200 which includes the plurality of server nodes 300-1, 300-2, ..., 300-n according to an exemplary embodiment.

According to an exemplary embodiment, the plurality of server nodes 300-1, 300-2, ..., 300-n may be implemented by using a plurality of process modules of different types of the micro server 200.

Also, according to an exemplary embodiment, the micro server 200 may connect a controller and the plurality of process modules of the different types through the common interface bus.

Specifically, as described above, the micro server 200 refers to a parallel processing server in which a plurality of server nodes (or process modules) having a core element of the server such as at least one CPU and a memory apparatus embedded therein are mounted, and which supports power, input and output, and auxiliary apparatuses for the server nodes.

Referring to FIG. 6, the management apparatus 100 according to an exemplary embodiment may be implemented as a management server of the micro server, and monitors and controls the micro server 200 including the plurality of server nodes 300-1, 300-2, ..., 300-n.

Specifically, the management apparatus 100 communicates with a main controller 220 of the micro server 200, and allows the user to set or select various functions supported by the micro server 200 and displays a variety of information provided by the micro server 200.

FIG. 7 is a view to explain a detailed configuration of the micro server 200 according to an exemplary embodiment.

In FIG 7, it is assumed that the management apparatus 100 is an admin server and the plurality of server nodes 300-1, 300-2, ..., 300-n are a plurality of process modules for convenience of explanation.

The micro server 200 according to an exemplary embodiment includes an input/output (I/O) device 210, a main controller 220, a common interface bus 230, a switch 240, and a plurality of server nodes (or process modules) 300.

The I/O device 210 includes at least one I/O card and exchanges data with an external device of the micro server 200. The I/O card may be implemented by using an Ethernet card 210-1 and a fiber channel card 210-2.

The main controller 220 controls the elements of the micro server 200.

Specifically, the main controller 220 may control the switch 240 to transmit data which is received through the I/O device 210 to each of the process modules 300 using the common interface bus 230. Also, the main controller 220 may control the switch 240 to transmit a control command or data which is received from the management apparatus 100 to each of the process modules 300 through the common interface bus 230.

The common interface bus 230 is an access apparatus that connects the elements of the micro server 200 to one another. The elements of the micro server 200 are connected to one another in parallel and perform two-way communication or half duplex communication under the control of the main controller 220. Specifically, the common interface bus 230 may include an interface bus 230-1 to connect control command signals and an interface bus 230-2 to connect data signals.

The common interface bus 230 may support at least one of an i2c interface and a PIC express interface. According to an exemplary embodiment, the interface bus 230-1 to connect the control command signals may be implemented by using an i2c interface bus, and the interface bus 230-2 to connect the data signals may be implemented by using a PCI express interface bus.

The switch 240 may selectively connect the I/O device 210 and the plurality of process modules 300. Specifically, the switch 240 may select one of the plurality of process modules 300 and connect the selected module to the I/O device 210 to transmit data received from the I/O device 210 to the process module 300 under the control of the main controller 220.

The switch 240 may be configured as a PCI express switch circuit (or a MRA PCIe switch), and may selectively adjust a connection relationship between the plurality of process modules 300 and at least one I/O card.

The micro server 200 supports the server nodes of the different types (or process modules) through the common interface bus 230. One micro server 200 has the server nodes of the different types mounted therein, thereby improving utilization according to a use of the server.

For example, when a micro server 200 of high performance is needed, the micro server 200 may have more process modules 300 having a high-performance CPU mounted therein, and, when a low-power micro server 200 is needed, the micro server 200 may have more process modules 300 having a low-power CPU mounted therein, so that utilization can be optimized according to a use of the server.

FIG. 8 is a view to explain an icon and a UI screen corresponding to a work environment according to an exemplary embodiment.

Referring to FIG. 8, when an O/S is run in a server node of the present disclosure, icons 811, 812, and 813 corresponding to work environments may be displayed on a display 800 of the user interface 120.

When the icons 811, 812, and 813 are selected, UI screens 821, 822, 823 corresponding to work environments may be provided. Output of work environments may be displayed through the UI screens 821, 822, and 823. Also, the user may input a control command to a running work environment through the UI screen.

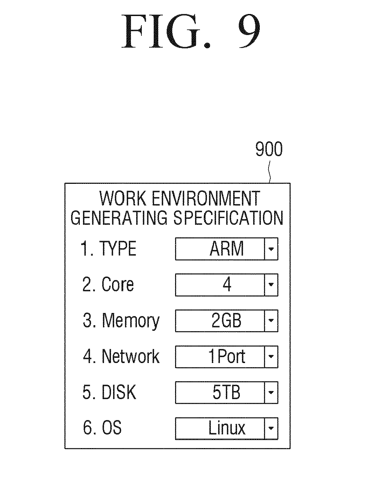

FIG. 9 is a view to explain a menu to receive input of information on a work environment that the user wants to generate according to an exemplary embodiment.
FIG. 9 illustrates a work environment generating specification 900 to receive information of a work environment to perform a task.

Through the work environment generating specification 900, the user may select apparatus information of a server node that the user wants to use to run a work environment, and an O/S that the user intends to use. Specifically, the user may select detailed specifications of a server node such as a CPU type, a CPU core, a memory, a network, and a disk, and a kind of an O/S that the user intends to use.

The work environment generating specification 900 is displayed through the display of the user interface 120, and is selected by the user.

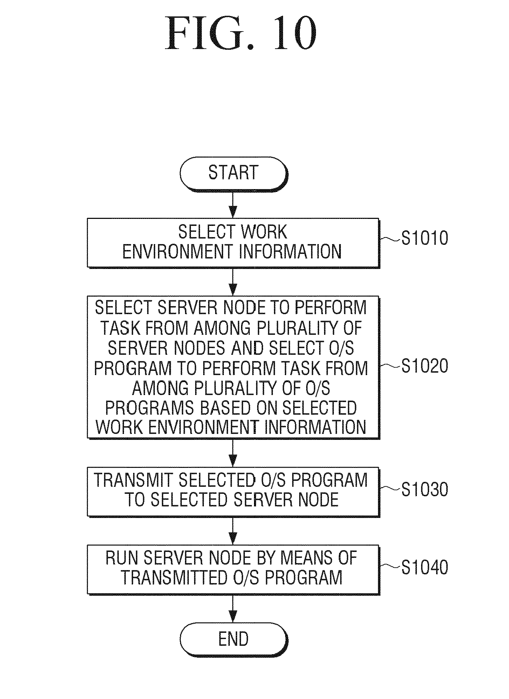

FIG. 10 is a flowchart to explain a method of managing a server node according to an exemplary embodiment.

Referring to FIG. 10, when the management apparatus 100, which is connectable with the plurality of server nodes 300-1, 300-2, ..., 300-n and stores apparatus information of each of the plurality of server nodes and a plurality of O/S data, receives input of information on a work environment to perform a task (operation S1010), the management apparatus 100 selects a server node to perform the task from among the plurality of server nodes and an O/S program to perform the task from among the plurality of O/S programs, based on the selected work environment information (operation S1020).

In operation S1020, which selects the server node to perform the task and selects the O/S programs to perform the task from among the plurality of O/S programs, when a plurality of server nodes corresponding to the selected work environment information are searched, the management apparatus 100 may select a server node and an O/S program to perform the task according to a running state of each of the searched plurality of server nodes.

After operation S1010, which receives selection of the information on the work environment to perform the task, when there is no server node corresponding to the selected work environment information from among the plurality of server node, a message informing that there is no corresponding server node may be displayed.

The management apparatus 100 may request apparatus information from each of the plurality of server nodes and receive the apparatus information at predetermined time intervals, and may update stored information with the apparatus information of the plurality of server nodes and store the apparatus information.

The management apparatus 100 transmits the selected O/S program to the selected server node (operation S1030).

The O/S program may include at least one of an O/S installation file, a backed up O/S image file, and a VM instance image file.

The transmitted O/S program may be installed in the server node and the server node may be run by the transmitted program (operation S1040).

When there is another running work environment in the selected server node, the management apparatus 100 may transmit the VM instance image file to the selected server node so that a plurality of work environments can be used, and allows a work environment selected on another work environment to be run as a virtual environment using the VM instance image file.

After this, when the O/S program is run in the selected server node, the management apparatus 100 may display an icon corresponding to the work environment and also may display a UI screen corresponding to the work environment, and may control the work environment.

The apparatus information of the plurality of server nodes may include at least one of CPU information, memory information, network information, and information on an available O/S program.

The plurality of server nodes may include server nodes of two or more types.

The method of managing the server node according to FIG. 10 may be executed in the management apparatus 100 having the configuration of FIG. 1, and may be executed in management apparatuses having other configurations.

The method of managing the server node according to the exemplary embodiment described above can provide a work environment by selecting an appropriate server node according to information of a running work environment and installing an O/S, without requiring the user to consider apparatus information of the plurality of server nodes 300-1, 300-2, ..., 300-n connected to the management apparatus 100 one by one.

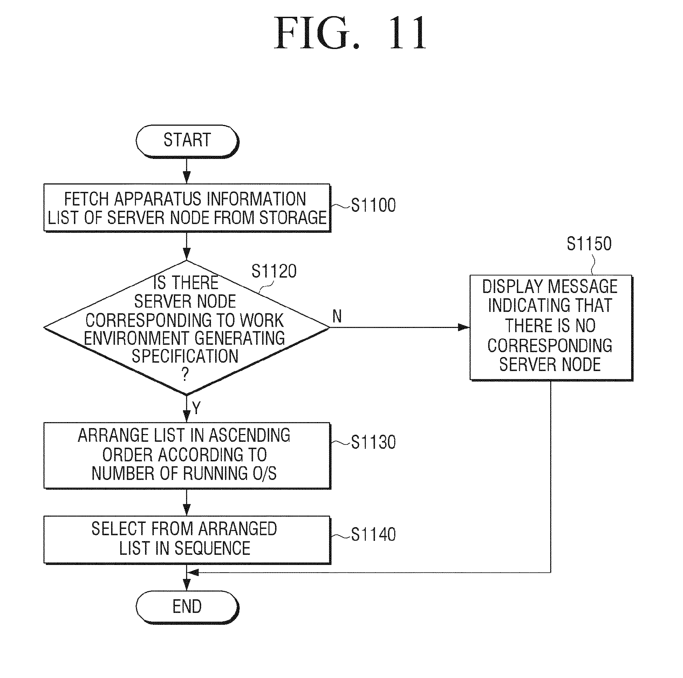

FIG. 11 is a flowchart to explain an operation of selecting a server node in detail according to an exemplary embodiment. Specifically, operation S1020 of selecting a server node of FIG. 10 will be explained.

Referring to FIG. 11, the management apparatus 100 fetches a list of apparatus information of server nodes from the storage (operation S1110), and searches whether there is a server node corresponding to a work environment generating specification input by the user (operation S1120).

When there is a corresponding server node (operation S1120: YES) as a result of the searching, the management apparatus 100 arranges a list of searched server nodes in ascending order according to a number of running O/Ss (or a number of work environments) (1130), and selects the server nodes from the list in sequence (operation S1140). That is, a server node that has the smallest number of running O/Ss is selected.

When there is no corresponding server node (operation S1120: NO) as a result of the searching, a message informing that there is no corresponding server node may be displayed (operation S1150).

The operation of selecting the server node of FIG. 11 may be executed in the management apparatus 100 having the configuration of FIG. 1, and may be executed in management apparatuses having other configurations.

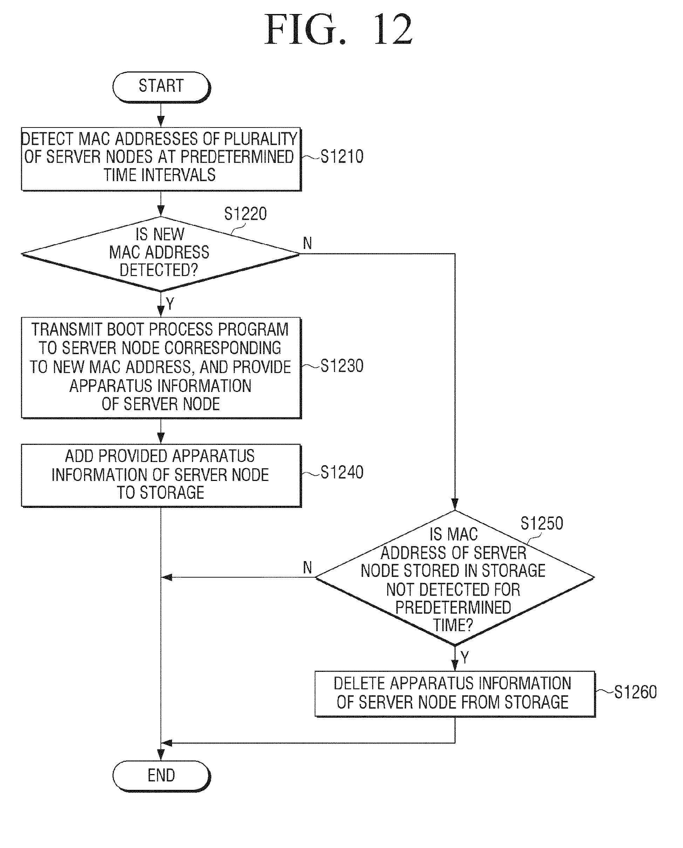

FIG. 12 is a flowchart to explain an operation of detecting a server node according to an exemplary embodiment in detail.

Referring to FIG. 12, the management apparatus 100 may detect MAC addresses of the plurality of server nodes 300 at predetermined time intervals (operation S1210).

The MAC addresses may be detected using a network maper (NMAP) or a dynamic host configuration protocol (DHCP) server.

When a new MAC address is detected (S1220: YES), the management apparatus 100 transmits a boot process program to a server node corresponding to the new MAC address and receives apparatus information of the server node (operation S1230).

The boot process program recited herein is a program that boots the newly added server node and transmits apparatus information of the server node to the management apparatus 100, and may be loaded into a memory of the server node and operated. For example, the boot process program may be run using a pre-boot execution environment (PXE) booting method.

The management apparatus 100 may add the apparatus information of the server node to the storage (operation S1240).

On the other hand, when a new MAC address is not detected (operation S1220: NO) and the MAC address of the server node stored in the storage is not detected for a predetermined time (operation S1250), the management apparatus 100 may delete the apparatus information of the server node from the storage (operation S1260).

As described above, the management apparatus 100 may determine whether the server node is mounted or dismounted by detecting the MAC address of the server node, and may update the apparatus information of the server node stored in the storage.

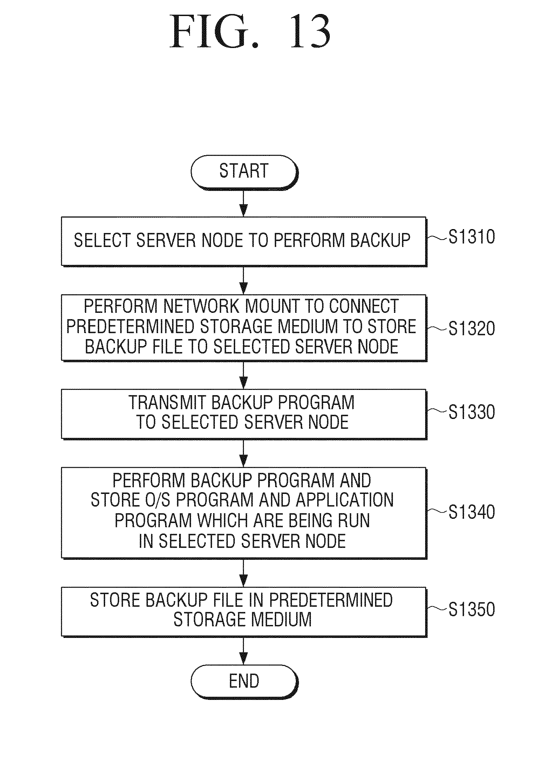

The operation of detecting the server node of FIG. 12 may be executed in the management apparatus 100 having the configuration of FIG. 1, and may be executed in management apparatuses having other configurations. FIG. 13 is a flowchart to explain an operation of backing up in detail according to an exemplary embodiment.

Referring to FIG. 13, when the management apparatus 100 receives selection of a server node to perform a backup from the user (operation S1310), the management apparatus 100 may perform a network mount to connect a predetermined storage medium to store a backup file to the selected server node (operation 1320).

The predetermined storage medium to store the backup file may be implemented by using the storage of the management apparatus 100, an external memory apparatus connected to the management apparatus 100, and a storage of one of the plurality of server nodes.

The network mount may be performed in various ways, such as using a network block device (NBD), iSCSI, or ATA over Ethernet (AoE).

The management apparatus 100 may transmit a backup program to the selected server node (operation S1330).

The management apparatus 100 performs the backup program and backs up an O/S program and an application program which are being run in the selected server node (operation S1340). Specifically, the management apparatus 100 runs the backup program, compresses the O/S program and the application program, and generates a backup file.

The management apparatus 100 may store the backup file in the predetermined storage medium (operation S1350).

After the storage operation, the management apparatus 100 may release the network mount when the backup is completed, and may store information on the storage space in which the backup file is stored in the storage. The management apparatus 100 may store the backed up O/S and user information in the storage along with the information on the storage space.

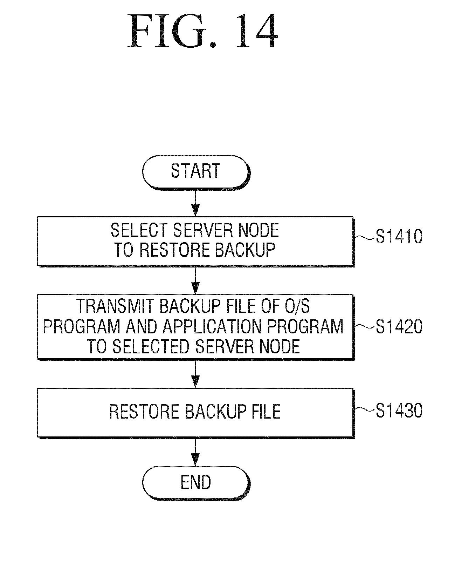

FIG. 14 is a flowchart to explain an operation of restoring a backup according to an exemplary embodiment in detail.

Referring to FIG. 14, when the management apparatus 100 receives selection of a server node to restore a backup (operation S1410), the management apparatus 100 may transmit the backup file in which the O/S program and the application program are backed up to the selected server node (operation S1420).

The management apparatus 100 may restore the backup file at the selected server node (operation S1430).

Specifically, the method of restoring the backup may be performed by transmitting the backed up file to the server node to restore the backup and decompressing the file.

As described above, the management apparatus 100 supports the backup function and the backup restoring function in case that data is lost or deleted due to a user's mistake, errors on the server node, a virus infection, or other causes of losing data.

The operations of backing up and restoring the backup of FIGS. 13 and 14 may be executed in the management apparatus 100 having the configuration of FIG. 1, and also may be executed in management apparatuses having other configurations.

The methods according to the above-described various exemplary embodiments may be programmed and stored in various storage media. Accordingly, the methods according to the various exemplary embodiments may be implemented in various types of management apparatuses 100 which execute storage media.

Also, the method of managing the server node described above may be implemented by using a program including an algorithm executable in the management apparatus 100. The program may be stored in a non-transitory computer readable medium. This refers to a medium that stores data semi-permanently rather than storing data for a very short time, such as a register, a cache, and a memory, and is readable by an apparatus. Specifically, the above-described various applications or programs may be stored in a non-transitory computer readable medium such as a compact disc (CD), a digital versatile disk (DVD), a hard disk, a Blu-ray disk, a universal serial bus (USB), a memory card, and a read only memory (ROM), and may be provided.

The foregoing exemplary embodiments and advantages are merely exemplary and are not to be construed as limiting the present inventive concept, which is defined in the claims. The exemplary embodiments can be readily applied to other types of apparatuses.

## Claims

1. A management apparatus which is connectable to a plurality of server nodes, the management apparatus comprising:
a user interface arranged to receive input of work environment information of a user;
a storage arranged to store apparatus information of each of the plurality of server nodes, a plurality of operating system programs and the received work environment information;
a controller arranged to select one of the plurality of server nodes to perform a task, and to select one of the plurality of operating system programs to perform the task, based on the received work environment information; and
a communication interface arranged to transmit the selected operating system program to the selected server node to allow the server node to run the selected operating system program.

2. The management apparatus as claimed in claim 1, wherein the plurality of server nodes are server nodes of at least two different types.

3. The management apparatus as claimed in claim 2, wherein the plurality of server nodes are implemented by using a plurality of process modules of different types of micro server,
wherein the micro server is arranged to connect a controller and the plurality of process modules of different types through a common interface bus.

4. The management apparatus as claimed in any one of the preceding claims, wherein the controller is arranged to automatically select one of the server nodes to perform the task, and to select one of the plurality of operating system programs to perform the task, based on the apparatus information of each of the plurality of server nodes.

5. The management apparatus as claimed in any one of the preceding claims, wherein the apparatus information comprises at least one of MAC address information, CPU information, memory information, network information and information of an available operating system program.

6. The management apparatus as claimed in any one of the preceding claims, wherein the communication interface is arranged to detect MAC addresses of the plurality of server nodes at predetermined time intervals.

7. The management apparatus as claimed in claim 6, wherein, when a new MAC address is detected, the communication interface is arranged to transmit a boot process program to a server node corresponding to the new MAC address, to receive apparatus information of the server node and to add the apparatus information to the storage.

8. The management apparatus as claimed in claim 6, wherein, when a MAC address of a server node stored in the storage is not detected for a predetermined time, the communication interface is arranged to delete apparatus information of the server node from the storage.

9. The management apparatus as claimed in any one of the preceding claims, wherein, when there is no server node corresponding to the selected work environment information, the controller is arranged to control the user interface to display a message informing that there is no corresponding server node.

10. The management apparatus as claimed in any one of the preceding claims, wherein the operating system program comprises at least one of an operating system installation file, a backed up operating system image file, and a virtual machine VM instance image file.

11. The management apparatus as claimed in any one of the preceding claims, wherein, when there is already a running work environment in the selected server node, the controller is arranged to control the selected server node to run the selected work environment on the already running work environment as a virtual environment.

12. The management apparatus as claimed in any one of the preceding claims, wherein, when a plurality of server nodes corresponding to the selected work environment information are searched, the controller is arranged to select a server node to perform the task according to a running state of each of the searched plurality of server nodes.

13. The management apparatus as claimed in any one of the preceding claims, wherein, when the operating system program is run in the selected server node, the controller is arranged to control the user interface to display an icon corresponding to the work environment.

14. The management apparatus as claimed in any one of the preceding claims, wherein the user interface is arranged to receive a selection of a server node to perform a backup, and
wherein the controller is arranged to transmit a backup program to the selected server node and to back up an operating system program and an application program which are being run.

15. A method of managing a server node of a management apparatus which is connectable with a plurality of server nodes and stores apparatus information of each of the plurality of server nodes and a plurality of operating system programs, the method comprising:
receiving input of work environment information;
selecting a server node to perform a task from among the plurality of server nodes, and selecting an operating system program to perform the task from among the plurality of operating system programs, based on the received work environment information;
transmitting the selected operating system program to the selected server node; and
running the server node by means of the transmitted operating system program.
